(19) **Europäisches Patentamt**

**European Patent Office**

**Office européen des brevets**

(11) **EP 0 984 552 B1**

(12) **EUROPÄISCHE PATENTSCHRIFT**

(45) Veröffentlichungstag und Bekanntmachung des Hinweises auf die Patenterteilung:
**12.10.2005 Patentblatt 2005/41**

(51) Int Cl.[7]: **H02P 9/10**

(21) Anmeldenummer: **99810677.7**

(22) Anmeldetag: **27.07.1999**

(54) **Verfahren zum Betrieb eines Kraftwerks**

Method for operating a power plant

Méthode de fonctionnement d'une centrale électrique

(84) Benannte Vertragsstaaten:
**DE GB**

(30) Priorität: **31.08.1998 DE 19839636**

(43) Veröffentlichungstag der Anmeldung:
**08.03.2000 Patentblatt 2000/10**

(73) Patentinhaber: **Alstom Technology Ltd**
**5400 Baden (CH)**

(72) Erfinder: **Joho, Reinhard**
**5024 Küttigen (CH)**

(56) Entgegenhaltungen:
EP-A- 0 098 047    EP-A- 0 296 529
EP-A- 0 378 085    EP-A- 0 828 333
GB-A- 2 196 448    US-A- 4 421 989

• **PATENT ABSTRACTS OF JAPAN vol. 1998, no. 13, 30. November 1998 (1998-11-30) & JP 10 208909 A (NGK INSULATORS LTD), 7. August 1998 (1998-08-07)**

**Beschreibung**

TECHNISCHES GEBIET

Die vorliegende Erfindung bezieht sich auf das Gebiet der Kraftwerkstechnik. Sie betrifft ein Verfahren zum Betrieb eines Kraftwerkes, umfassend einen von einer Turbine angetriebenen Generator, welcher elektrische Leistung erzeugt und über einen Generatorschalter an ein Netz abgibt. Derartige Verfahren sind in vielfältiger Form aus dem Stand der Technik und beispielsweise aus EP-A2-0 378 085 bekannt.

STAND DER TECHNIK

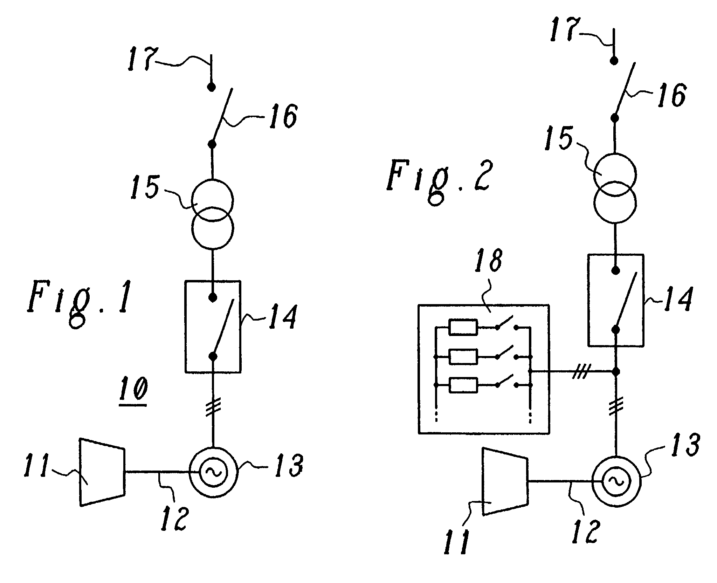

Wie aus der stark vereinfachten Darstellung der Fig. 1 ersichtlich ist, wird in einem Kraftwerk 10, der elektrische Leistung erzeugende, von einer Turbine 11 über eine Welle 12 angetriebene Generator 13 über einen Generatorschalter 14, einen Transformator 15 und einen Netzschalter 16 mit einem Netz 17 verbunden. Bei starken Störungen im Netz 17 wird der Generator 13 durch Öffnen des Generatorschalters 14 unmittelbar hinter den Generatorklemmen vom Netz 17 getrennt. Eine bekannte solche Störung ist z.B. ein Leitungskurzschluss. Für die nachfolgende Wiedereinschaltung bleiben üblicherweise bis zu 300 ms Zeit, innerhalb derer die Kriterien Fehlwinkel und Fehlschlupf noch toleriert werden können.

Falls die Störung erst nach Ablauf dieser Zeitspanne geklärt bzw. behoben werden kann, ist eine zeitraubende Neusynchronisierung des Generators 13 auf das Netz 17 nötig, während der das geschwächte Netz (andere Kraftwerke müssen eventuell auch erst neu synchronisieren) endgültig zusammenbrechen kann. Diese Gefahr wird in Zukunft sogar vermehrt auftauchen, weil die Netze in zunehmendem Masse an ihrer Kapazitätsgrenze angelangt sind.

Aus EP-A2-0 378 085 ist eine Abgasturbinen-Generatoranlage für Dieselmotoren, insbesondere für Schiffsdieselmotoren mit oder ohne Wellengenerator sowie für kombinierten Wellengenerator-Motor- und Generatorbetrieb mit oder ohne frequenzentkoppelte Umrichter bekannt. Dabei wird ein überschüssiger, vorzugsweise ein Hochleistungs-Turbolader nicht zugeführter Teil der Dieselmotorabgase einer Nutzturbine zugeführt, die über ein Untersetzungsgetriebe einen Synchrongenerator antreibt, der über einen Netzschalter die Energie in ein Netz oder auf einen Synchronwellengenerator des Dieselmotors einspeist. Ein über einen Antiduktor ansteuerbarer Widerstand ist zur Belastung des Turbogenerators bei Lastausfall des Netzes vorgesehen.

In der EP-A1-0 098 047 wird ein Generator vor einer Turbine angetrieben. Der Generator versorgt ein Netz und eine Hilfslast.

GB-A-2 196 448 offenbart einen Generator, der an ein Netz angeschlossen ist. Zusätzlich ist an den Generator eine Zusatzlast, die je nach Belastungslage zu- oder abgeschaltet wird.

JP-A-10-208 909 offenbart eine PTC-Strombegrenzer.

EP-A-0 828 333 offenbart ein Verfahren zur Herstellung eines Strombegrenzers mit einem Hochtemperatur-Supraleiter und einen Strombegrenzer

DARSTELLUNG DER ERFINDUNG

Es ist daher Aufgabe der Erfindung, ein Verfahren zum Betrieb eines Kraftwerkes anzugeben, mit welchem eine Wiederzuschaltung des nach einer Störung vom Netz abgetrennten Generators ohne langwierige Drehzahlangleichung bis in den Bereich von einigen Sekunden hinein gewährleistet werden kann.

Die Aufgabe wird durch ein Verfahren mit den Merkmalen des Anspruchs 1 gelöst.

Das Verfahren zum Betrieb eines Kraftwerks entsprechend dem Oberbegriff des Anspruchs 1 ist erfindungsgemässe dadurch gekennzeichnet, dass der einzustellende Wert des elektrischen Widerstands zu Beginn des Inselbetriebes grob aus den unmittelbar vorausgegangenen Grössen Wirklast und Erregerstrom des Generators ermittelt wird, dass danach durch Anpassung dieses Wertes und/oder durch Feinregulierung des Erregerstromes eine konstante Phasendifferenz der Generatorspannung zur Spannung des Netzes eingeregelt wird. Vorzugsweise wird die konstante Phasendifferenz so eingeregelt, dass bei Widerstands-Ersatzlast gilt: $I_{Gen}' \cdot U_{Gen}' = I_{Gen} \cdot U_{Gen} \cdot \cos\varphi$, mit dem Generatorstrom $I_{Gen}$ und der Generatorspannung $U_{Gen}$ im Normalbetrieb vor der Störung und dem Generatorstrom $I_{Gen}'$ und der Generatorspannung $U_{Gen}'$ während des Inselbetriebes. Es stellt sich in der Folge eine konstant bleibende Phasendifferenz $\Delta\varphi$ zwischen Generatorspannung $U_{Gen}'$ und Netzspannung $U_{Netz}$ ein. So speist der Generator nach Wiederzuschaltung sofort wieder Leistung ins Netz. Die Wiederzuschaltung zum Netz ist damit zu einem beliebigen Zeitpunkt sichergestellt. Dadurch wird ein erheblicher Beitrag zur Stabilität des Netzes geleistet. Besonders günstig gestaltet sich der Inselbetrieb, wenn der Betrieb der Turbine mit einem Turbinenregler geregelt wird, und die Regelstellung des Turbinenreglers während des Inselbetriebes zumindest in einer ersten Phase konstant gehalten ("eingefroren") wird.

Eine zweite bevorzugte Ausführungsform des erfindungsgemässen Verfahrens ist dadurch gekennzeichnet, dass der Betrieb der Turbine mit einem Turbinenregler geregelt wird, dass die Generatorspannung mit einem Spannungsregler geregelt wird, dass dass während des Inselbetriebes durch abgestimmtes Regeln des Turbinenreglers, des Spannungsreglers und des einstellbaren widerstands und damit resultierendes Anpassen der Phasendifferenz der Generatorspannung zur Spannung des Netzes bei konstanter Drehzahl des Generators die Leistung und/oder die Generatorspannung verändert werden. Hierdurch können gezielt bestimmte Parameter des Generators geändert werden, um die Wiederzuschaltbarkeit zum Netz günstig zu beeinflussen. Weitere Ausführungsformen ergeben sich aus den abhängigen Ansprüchen.

## KURZE ERLÄUTERUNG DER FIGUREN

Die Erfindung soll nachfolgend anhand von Ausführungsbeispielen im Zusammenhang mit den Zeichnunen näher erläutert werden. Es zeigen

Fig. 1    das vereinfachte Schema eines an ein Netz angeschlossenen Kraftwerkes, wie es aus dem Stand der Technik vielfach bekannt ist;

Fig. 2    das Schema aus Fig. 1 mit einer zusätzlichen zuschaltbaren elektrischen Ersatzlast gemäss der Erfindung;

Fig. 3    ein Blockschaltbild zur Grobeinstellung der elektrischen Ersatzlast gemäss einem bevorzugten Ausführungsbeispiel des erfindungsgemässen Verfahrens;

Fig. 4    ein Regelschema für die Einregelung einer konstanten Phasendifferenz der Generatorspannung zum Netz mittels der elektrischen Ersatzlast im inselbetrieb gemäss der Erfindung;

Fig. 5    die relative Lage der Strom- und Spannungszeiger im Normalbetrieb des Kraftwerkes;

Fig. 6    die relative Lage der Strom- und Spannungszeiger während des Inselbetriebes nach der Erfindung mit der konstanten Phasendifferenz $\Delta\varphi$;

Fig. 7    ein Ausführungsbeispiel eines Kraftwerkes nach der Erfindung mit supraleitendem Strombegrenzer und Power-Booster; und

Fig. 8    ein bevorzugtes Ausführungsbeispiel für eine einstellbare elektrische Ersatzlast, wie sie in der Erfindung eingesetzt werden kann.

## WEGE ZUR AUSFÜHRUNG DER ERFINDUNG

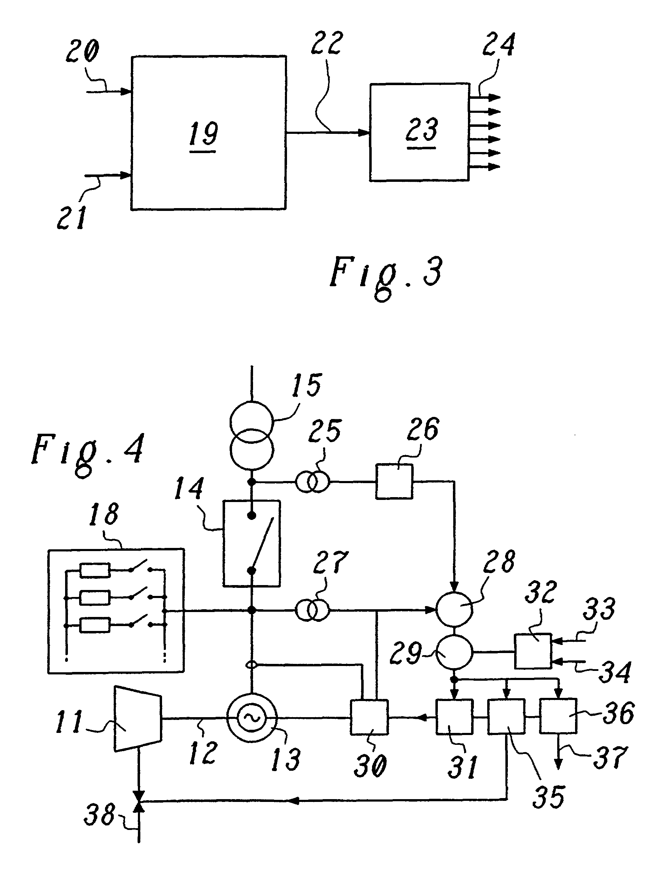

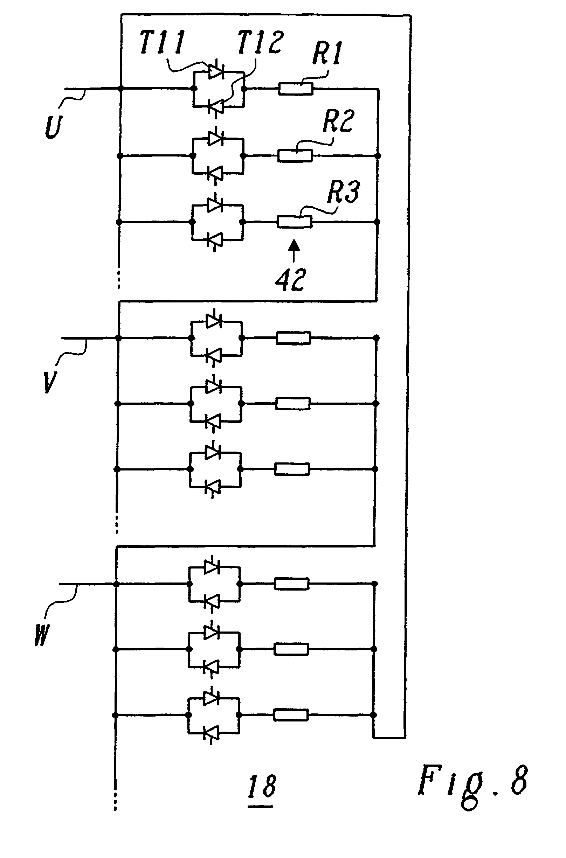

In Fig. 2 ist das im Zusammenhang mit dem Schema aus Fig. 1 beschriebene Kraftwerk 10 nach dem Stand der Technik mit einer zusätzlichen zuschaltbaren elektrischen Ersatzlast 18 ausgestattet. Die elektrische Ersatzlast 18 kann nach Bedarf zwischen dem Generator 13 und dem Generatorschalter 14 an die Generatorklemmen angeschlossen werden. Die elektrische Ersatzlast 18 ist bei einem dreiphasigen Ausgang des Generators 13 - wie er in Fig. 2 angenommen ist - vorzugsweise gemäss Fig. 8 als dreiphasiger schaltbarer Widerstand ausgelegt, wobei für jede Phase U, V und W eine Mehrzahl von in den Werten abgestuften Teilwiderständen R1,..,R3 in Parallelschaltung jeweils über ein Paar von antiparallel geschalteten Thyristoren T11, T12 zu- bzw. abgeschaltet werden können. Durch die Abstufung der Teilwiderstände R1,..,R3 lassen sich durch geeignete Kombination Werte des Gesamtwiderstandes in einer feinen Abstufung einstellen, so dass die elektrische Ersatzlast auf einfache Weise durch elektronische Ansteuerung der Thyristoren T11, T12 relativ genau einstellbar ist.

Der Einsatz der elektrischen Ersatzlast 18 im Störungsfall erfolgt vorzugsweise wie nachfolgend beschrieben: Wird der (in den Figuren nicht gezeigten) Netzüberwachung ein Kurzschluss im Netz 17 angezeigt, wird ein Auslösebefehl zum Öffnen des Generatorschalters 14 gegeben. Gleichzeitig mit dem Abtrennen vom Netz 17 durch den Generatorschalter 14 (genauer: gleichzeitig mit dem Auslösebefehl) werden die Generatorklemmen (durch Schliessen der Thyristorschalter in der Ersatzlast) auf die elektrische Ersatzlast 18 umgeschaltet. Die elektrische Ersatzlast 18 entspricht in ihrem Wert dabei möglichst der dem Kurzschluss vorangegangenen Wirklast. Der für die Turbine 11 verantwortliche Turbinenregler und der Erregerstrom für den Generator 13 werden während der Störung zumindest in einer ersten Phase konstant gehalten ("eingefroren"). Wie bereits erwähnt, besteht die elektrische Ersatzlast vorzugsweise aus thyristorgeschalteten ohmschen Teilwiderständen R1,..,R3.

Die Zuschaltung der benötigten Teilwiderstände in der elektrischen Ersatzlast 18 wird zu Beginn grob aus der eingefrorenen Wirkleistung und dem Erregerstrom ermittelt. Dies geschieht gemäss dem in Fig. 3 wiedergegebenen Blockschema dadurch, dass die Wirkleistung über einen Eingang 20 für die Wirkleistung, und der Erregerstrom über einen Eingang 21 für den Erregerstrom auf eine Steuerung 19 gegeben werden, die z.B. nach Massgabe des ASA-Verfahrens einen entsprechenden Widerstandswert für die elektrische Ersatzlast erzeugt, der über eine Signalleitung 22 an eine Ansteuerschaltung 23 für die Ersatzlast weitergeleitet wird. Die Ansteuerschaltung 23 gibt dann an einzelnen Steuerausgängen 24 für die Teilwiderstände R1,..R3 der elektrischen Ersatzlast 18 entsprechende Befehle für die Thyristoren T11, T12.

Nach der Grobeinstellung folgt mit dem in Fig. 4 dargestellten Reglerschema die Einregelung der Generatorspannung ($U_{Gen}$) auf eine konstante Phasendifferenz ($\Delta\varphi$) relativ zur Netzspannung $U_{Netz}$. Hierzu wird über einen ersten Übertrager 25 mit nachfolgender PLL-Schaltung 26 das Netz nachgebildet und der resultierende Phasenwinkel $\varphi_{Netz}$ auf den einen Eingang eines ersten Subtrahierers (Vergleichers) 28 gegeben. Auf den anderen Eingang des ersten Subtrahierers 28 kommt die über einen zweiten Übertrager 27 an den Generatorklemmen abgenommene Phase $\varphi_{Gen}$ der Gene-

ratorspannung. Die resultierende Phasendifferenz (Istwert) wird in einem nachfolgenden zweiten Subtrahierer (Vergleicher) 29 mit der Phasendifferenz Δφ (Sollwert) verglichen, die in einer Phasenwinkelschaltung 32 als Sollwertgeber aus den Werten der am Eingang 33 anstehenden Wirkleistung und dem am Eingang 34 anstehenden Erregerstrom erzeugt wird. Die Differenz von Istwert und Sollwert am Ausgang des zweiten Subtrahierers 29 wird je auf einen Erregerstromregler 31, einen Wirkleistungsregler 35 und einen Ersatzlastregler 36 gegeben. Der Erregerstromregler 31 steuert über eine (optionale) AVR-Schaltung 30 den Erregerstrom des Generators 13. Der Wirkleistungsregler 35 verändert die Sollwirkleistung 38 des Turbinenreglers, die der eingefrorenen Wirkleistung vor der Abschaltung gleich ist. Der Ersatzlastregler 36 steuert über den Ausgang 37 die vorher grob voreingestellte elektrische Ersatzlast 18.

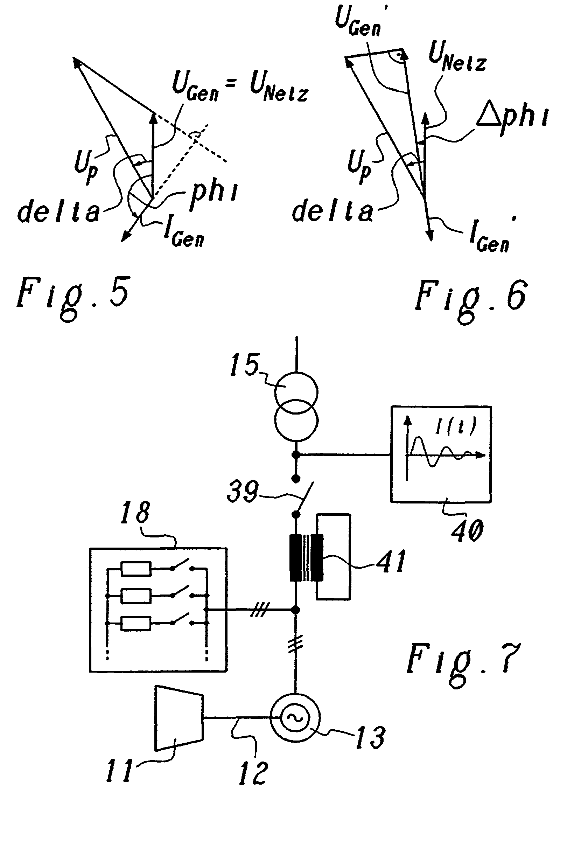

Die angestrebte konstante Phasendifferenz Δφ (Δphi) ergibt sich nach den Fig. 5 (relative Lage der Strom- und Spannungszeiger im Normalbetrieb des Kraftwerkes) und 6 (relative Lage der Strom- und Spannungszeiger während des Inselbetriebes), wobei gilt:

$$I_{Gen}' \cdot U_{Gen}' = I_{Gen} \cdot U_{Gen} \cdot \cos\varphi,$$

mit dem Generatorstrom $I_{Gen}$, der Generatorspannung $U_{Gen}$ und dem Phasenwinkel $\varphi$ im Normalbetrieb vor der Störung und dem Generatorstrom $I_{Gen}'$ und der Generatorspannung $U_{Gen}'$ während des Inselbetriebes (der Vektor der Polradspannung $U_p$ symbolisiert in den Fig. 5 und 6 dabei die Winkellage des Rotors gegenüber der Statorspannung und ist ein Mass für den Erregerstrom). Bei der so festgehaltenen Phasendifferenz Δφ speist der Generator 13 nach Wiederzuschaltung ohne Synchronisiervorgang sofort wieder Leistung ins Netz 17. Die Wiederzuschaltung zum Netz 17 ist damit zu einem beliebigen Zeitpunkt sichergestellt. Die Spannung wird während dem Inselbetrieb (d.h. mit dem Generator 13 vom Netz 17 getrennt und auf die elektrische Ersatzlast 18 arbeitend) in den meisten Fällen ansteigen, da der vorausgegangene Betrieb übererregt war, was aus der Sicht des Generators für die beabsichtigte kurze Zeitdauer vertretbar ist. Der resultierende Blindleistungsstoss ist beim Wiederzuschalten als "Stabilitätsspritze" sogar erwünscht.

Mit dieser Umschaltung auf die Ersatzlast 18 wird ein Überschwingen der Drehzahl verhindert und der Generator 13 kann in einer Zeitspanne, die bestimmt ist durch das Energieaufnahmevermögen der Ersatzlast 18, im Inselbetrieb phasenstarr zum Netz 17 weiterbetrieben werden. Beim Wiederschliessen des Generatorschalters 14 wird die Ersatzlast 18 abgetrennt. Dies erfolgt durch bei den Thyristoren T11, T12 der Ersatzlast 18 beim nächstfolgenden Stromnulldurchgang. Das Kriterium der Wiederzuschaltung des Generators 13 ohne langwierigen Drehzahlangleich kann damit bis in den Bereich einiger Sekunden gewährleistet werden. Dadurch wird ein erheblicher Beitrag zur Stabilität des Netzes 17 geleistet.

Die Ersatzlast besteht gemäss Fig. 8 aus einer Anzahl von zuschaltbaren Teilwiderständen (R1,..,R3 für die Phase U). Die Zuschaltung erfolgt mit antiparallel geschalteten Thyristorpaaren (T11, T12 für die Phase U), die nötigenfalls durch Serie- oder Parallelschaltung verstärkt werden können. Die Serieschaltung kann dabei aus Spannungs- und/oder Redundanzgründen erfolgen. Besonders geeignet als Schalter sind Thyristoren auf der Basis von SiC. Die Teilwiderstände R1,..,R3 können wertemässig ungleich gross sein, also z.B. in einer geometrischen Abstufung. Vorteilhafterweise werden Widerstände mit grossem Energieaufnahmevermögen verwendet, wie sie beispielsweise im Handel erhältlich sind. Die elektrische Ersatzlast 18 lässt sich vergleichsweise platzsparend aufbauen. So ergibt sich für eine Leistung von 500 MVA ein Schrankvolumen von schätzungsweise 20 m³.

Mit einem abgestimmten Regeln von Turbinenregler, Spannungsregler und Ersatzlast gemäss Fig. 4 kann während des Inselbetriebs aber auch nach einem vorgegebenen Algorithmus auf höhere oder tiefere Leistung und/oder auf höhere oder tiefere Spannung zugestrebt werden, ohne die Welle 12 zu beschleunigen oder zu bremsen. Gleichzeitig wird die Phasenwinkellage zum Netz 17 angepasst. Auch in diesem Fall ist ein problemloses Wiederzuschalten über einen längeren Zeitraum gewährleistet.

Weiterhin ist es denkbar, bei Kraftwerken mit mehreren Generatoren jedem Generator eine eigene Ersatzlast zuzuordnen, jedoch gewisse Komponenten der Ersatzlast wie z.B. die Phasenwinkelregelung (Fig. 4) zu zentralisieren, d.h. für alle Ersatzlasten gemeinsam vorzusehen.

Weiterhin ist es möglich, in der Regelung nach Fig. 4 anstelle der synthetischen Netznachführung mit der PLL-Schaltung 26 die Information über die Phasenlage des Netzes 17 über einen separaten Informationskanal von einer Netzleitstelle zu übermitteln.

Auch ist es denkbar, für die Thyristoren T11, T12 anstelle einer Vollwellensteuerung zur Erzeugung einer kombinierten ohmsch-induktiven Belastung eine Phasenanschnittsteuerung vorzusehen.

Sollte die elektrische Ersatzlast 18 im Einsatzfall mit ihrer thermischen Kapazität am Ende sein, kann die Leistung der Ersatzlast derart zurückgenommen werden, dass der Turbinenregler der Lastrücknahme folgen kann, um wenigstens Drehzahlüberschwingen zu vermeiden. Es muss dann allerdings ein neuer Synchronisiervorgang aufgebaut werden.

Weitere Variationsmöglichkeiten innerhalb der Erfindung ergeben sich aus der Darstellung der Fig. 7: Die Trennung vom Netz erfolgt in diesem Fall über einen supraleitenden Strombegrenzer (SL-Strombegrenzer 41), der im Falle eines Kurzschlusses beim Überschreiten des Strom-Momentanwertes normalleitend wird, und damit den Generator 13 quasi vom Netz abkoppelt. Anstelle des SL-Strombegrenzers 41 kann aber auch ein PTC-Strombegrenzer eingesetzt werden. Der Generator 13 wird so vom Störstrom isoliert, was sich günstig auf den Wellenstrang und die Statorwicklung auswirkt. Im Zusammenhang mit dem Einsatz derartiger Begrenzer kann zwischen dem Netz und einem Schalter 39 auch eine Hilfsschaltung 40 eingesetzt werden, mittels derer ein synthetischer Kurzschlussstrom eingespeist und der Netzschutz so zum Ansprechen gebracht werden kann.

BEZUGSZEICHENLISTE

| | |
|---|---|
| 10 | Kraftwerk |
| 11 | Turbine |
| 12 | Welle |
| 13 | Generator |
| 14 | Generatorschalter |
| 15 | Transformator |
| 16 | Netzschalter |
| 17 | Netz |
| 18 | Ersatzlast (elektrisch) |
| 19 | Steuerung |
| 20 | Eingang für Wirkleistung P |
| 21 | Eingang für Erregerstrom $I_f$ |
| 22 | Signalleitung für Lastwiderstandswert |
| 23 | Ansteuerschaltung Ersatzlast |
| 24 | Steuerausgang Teilwiderstand |
| 25,27 | Uebertrager |
| 26 | PLL-Schaltung |
| 28,29 | Subtrahierer |
| 30 | AVR-Schaltung |
| 31 | Errgerstromregler |
| 32 | Phasenwinkelschaltung |
| 33 | Eingang für Wirkleistung P |
| 34 | Eingang für Erregerstrom $I_f$ |
| 35 | Wirkleistungsregler |
| 36 | Ersatzlastregler |
| 37 | Ausgang Ersatzlast |
| 38 | Sollwirkleistung |
| 39 | Schalter |
| 40 | Hilfsschaltung |
| 41 | SL-Strombegrenzer |
| 42 | Widerstand (zuschaltbar) |
| R1,..,R3 | Teilwiderstand |
| T11,T12 | Thyristor |
| $I_{Gen}$, $I_{Gen}'$ | Generatorstrom |
| $U_{Gen}$, $U_{Gen}'$ | Generatorspannung |
| $U_{Netz}$ | Netzspannung |
| phi($\varphi$) | Phasenwinkel |
| $\Delta$phi($\varphi$) | Phasendifferenz |
| delta($\delta$) | Polradwinkel |
| $U_p$ | Polradspannung |

**Patentansprüche**

1. Verfahren zum Betrieb eines Kraftwerks (10),

   - wobei ein Generator (13) von einer Turbine (11) angetrieben wird, eine elektrische Leistung erzeugt und über einen Generatorschalter (14) an ein Netz (17) abgibt,
   - wobei bei einer Störung im Netz der Generator (13) durch Öffnen des Generatorschalters (14) vom Netz (17) getrennt wird, gleichzeitig mit dem Öffnen des Generatorschalters (14) der Generator (13) mit seinen Generatorklemmen auf eine elektrische Ersatzlast (18) umgeschaltet wird und in einem inselbetrieb betrieben wird, und
   - nach Beseitigung der Netzstörung beim Schliessen des Generatorschalters (14) die elektrische Ersatzlast (18) wieder von den Generatorklemmen abgetrennt wird,
   - wobei als Ersatzlast (18) ein zuschaltbarer Widerstand (42) verwendet wird,
   - wobei der Widerstandswert des zuschaltbarer Widerstands (42) für die Aufschaltung des Generators (13) auf einen Wert eingestellt wird, welche ungefähr der Wirklast beim vorangegangenen Betrieb des Generators (13) am Netz (17) entspricht,

   **dadurch gekennzeichnet, dass**

   - der einzustellende Wert des Widerstands (42) zu Beginn des Inselbetriebs grob aus den unmittelbar vorausgegangenen Grössen Wirklast und Erregerstrom des Generators ermittelt wird und
   - dass danach durch Anpassung dieses Werts und/oder Feinregulierung des Erregerstroms eine konstante Phasendifferenz ($\Delta\varphi$) der Generatorspannung ($U_{Gen}$) zur Spannung ($U_{Netz}$) des Netzes (17) eingeregelt wird.

2. Verfahren nach den Anspruch 1,
   **dadurch gekennzeichnet, dass**
   die konstante Phasendifferenz ($\Delta\varphi$) so eingeregelt wird, dass gilt:
   $I_{Gen}' * U_{Gen}' = I_{Gen} * U_{Gen} * \cos(\varphi)$, mit dem Generatorstrom $I_{Gen}$ und der Generatorspannung $U_{Gen}$ im Normalbetrieb vor der Störung und dem Generatorstrom $I_{Gen}'$ und der Generatorspannung $U_{Gen}'$ während des Inselbetriebs.

3. Verfahren nach den Anspruch 1 oder 2,
   **dadurch gekennzeichnet, dass**
   der Betrieb (11) der Turbine mit einem Turbinenregler geregelt wird, und dass die Regelstellung des Turbinenreglers während des Inselbetriebs zumindest in einer ersten Phase konstant gehalten wird.

**4.** Verfahren nach den Anspruch 1,
**dadurch gekennzeichnet, dass**

- der Betrieb der Turbine (1) mit einem Turbinenregler geregelt wird,
- dass die Generatorspannung ($U_{Gen}$) mit einem Spannungsregler geregelt wird, und
- dass während des Inselbetriebs durch abgestimmtes Regeln des Turbinenreglers, des Spannungsreglers und des einstellbaren Widerstands (42) und damit resultierendes Anpassen der Phasendifferenz ($\Delta\varphi$) der Generatorspannung ($U_{Gen}$) zur Spannung ($U_{Netz}$) des Netzes (17) bei konstanter Drehzahl des Generators (13) die Leistung und/oder die Generatorspannung ($U_{Gen}$) verändert werden.

**5.** Verfahren nach einem der Ansprüche 1 bis 4,
**dadurch gekennzeichnet, dass**
als zuschaltbarer Widerstand (42) eine Mehrzahl von unabhängig zuschaltbaren Teilwiderständen (R1, ..., R3) verwendet wird.

**6.** Verfahren nach Anspruch 5,
**dadurch gekennzeichnet, dass**
als zuschaltbarer Widerstand (42) eine Mehrzahl von unabhängig zuschaltbaren Teilwiderständen (R1, ..., R3), die parallel geschaltet sind und abgestufte Widerstandbeiwerte aufweisen, verwendet wird.

**7.** Verfahren nach einem der Ansprüche 1 bis 6,
**dadurch gekennzeichnet, dass**
der einzustellende Widerstand (42) über Leistungshalbleiter, vorzugsweise über antiparallel geschaltete Paare von Tyristoren (T11, T12) zugeschaltet wird.

**8.** Verfahren nach einem der Ansprüche 1 bis 7
**dadurch gekennzeichnet, dass**
der Generator (13) vom Netz durch einen Begrenzer, insbesondere einen SL-Begrenzer (41) oder einen PTC-Begrenzer, getrennt wird.

**Claims**

**1.** Method for operation of a power station (10),

- with a generator (13) being driven by a turbine (11), producing electrical power and emitting this power via a generator switch (14) to a power supply system (17),
- with the generator (13) being disconnected from the power supply system (17) by opening the generator switch (14) in the event of a disturbance in the power supply system, and with the generator terminals of the generator (13) being switched to an electrical substitute load (18) and with the generator (13) being operated in an insular mode, at the same time that the generator switch (14) is opened, and
- once the power supply system disturbances have been rectified, the electrical substitute load (18) being disconnected from the generator terminals again when the generator switch (14) is closed,
- with a resistance (42) which can be connected being used as the substitute load (18), and
- with the resistance value of the resistance (42) which can be connected being set, for the connection of the generator (13), to a value which corresponds approximately to the real load when the generator (13) was previously being operated on the power supply system (17),

**characterized in that**

- the value of the resistance (42) to be set at the start of the insular mode is determined coarsely from the immediately preceding magnitudes of the real load and field current of the generator, and
- **in that** a constant phase difference ($\Delta\varphi$) is then set between the generator voltage ($U_{Gen}$) and the voltage ($U_{Power}$) of the power supply system (17) by adaptation of this value and/or fine control of the field current.

**2.** Method according to Claim 1,
**characterized in that**
the constant phase difference ($\Delta\varphi$) is controlled such that:
$I'_{Gen}*U'_{Gen} = I_{Gen}*U_{Gen}*\cos(\varphi)$, with the generator current $I_{Gen}$ and the generator voltage $U_{Gen}$ during normal operation before the disturbance, and with the generator current $I'_{Gen}$ and the generator voltage $U'_{Gen}$ during the insular mode.

**3.** Method according to Claim 1 or 2,
**characterized in that**
the operation (11) of the turbine is controlled by a turbine regulator, and **in that** the control setting of the turbine regulator is kept constant at least in a first phase during the insular mode.

**4.** Method according to Claim 1,
**characterized in that**

- the operation of the turbine (1) is controlled by a turbine regulator,
- **in that** the generator voltage ($U_{Gen}$) is controlled by a voltage regulator, and
- **in that**, during the insular mode, the power and/or the generator voltage ($U_{Gen}$) are varied by matched control of the turbine regulator, of the voltage regulator and of the variable resistance (42) and adaptation resulting from this of the phase difference ($\Delta\varphi$) between the generator voltage ($U_{Gen}$) and the voltage ($U_{Power}$) of the power supply system (17) with the generator (13) rotation speed being constant.

**5.** Method according to one of Claims 1 to 4, **characterized in that** two or more resistance elements (R1, ..., R3) which can be connected independently are used as the resistance (42) which can be connected.

**6.** Method according to Claim 5, **characterized in that** two or more resistance elements (R1, ..., R3) which can be connected independently, are connected in parallel and have graduated resistance coefficients are used as the resistance (42) which can be connected.

**7.** Method according to one of Claims 1 to 6, **characterized in that** the resistance (42) to be set is connected via power semiconductors, preferably via pairs of thyristors (T11, T12) which are connected back-to-back in parallel.

**8.** Method according to one of Claims 1 to 7, **characterized in that** the generator (13) is disconnected from the power supply system by a limiter, in particular an SL limiter (41) or a PTC limiter.

**Revendications**

**1.** Procédé de fonctionnement d'une centrale électrique (10),

- dans lequel un générateur (13) est entraîné par une turbine (11), une puissance électrique est produite et fournie à un réseau (17) par le biais d'un coupleur de générateur (14),
- dans lequel, en cas de perturbation du réseau, le générateur (13) est séparé du réseau (17) par l'ouverture du coupleur de générateur (14), et simultanément à l'ouverture du coupleur de générateur (14), le générateur (13) est commuté avec ses bornes de générateur à une charge électrique de substitution (18) et est entraîné en fonctionnement isolé, et
- après l'élimination de la perturbation du réseau, à la fermeture du coupleur de générateur (14), la charge électrique de substitution (18) est à nouveau séparée des bornes du générateur,
- dans lequel on utilise, comme charge de substitution (18), une résistance (42) pouvant être mise en circuit,
- dans lequel la valeur de résistance de la résistance (42) pouvant être mise en circuit est ajustée pour le branchement du générateur (13) à une valeur qui correspond approximativement à la charge effective au cours du fonctionnement précédent du générateur (13) sur le réseau (17),

**caractérisé en ce que**

- la valeur de la résistance (42) à ajuster au début du fonctionnement isolé est déterminée grossièrement à partir des valeurs immédiatement précédentes de la charge effective et du courant d'excitation du générateur et
- **en ce que** par adaptation de cette valeur et/ou par ajustement fin du courant d'excitation, on ajuste ensuite une différence de phase constante ($\Delta\varphi$) de la tension du générateur ($U_{gen}$) par rapport à la tension ($U_{res}$) du réseau (17).

**2.** Procédé selon la revendication 1, **caractérisé en ce que** la différence de phase constante ($\Delta\varphi$) est ajustée de telle sorte que l'on ait : $I'_{gen} * U'_{gen} = I_{gen} * U_{gen} * \cos(\varphi)$, avec le courant du générateur $I_{gen}$ et la tension du générateur $U_{gen}$ en fonctionnement normal avant la perturbation, et avec le courant du générateur $I'_{gen}$ et la tension du générateur $U'_{gen}$ pendant le fonctionnement isolé.

**3.** Procédé selon la revendication 1 ou 2, **caractérisé en ce que** le fonctionnement (11) de la turbine est régulé avec un régulateur de turbine, et **en ce que** la position de réglage du régulateur de turbine est maintenue constante au moins dans une première phase pendant le fonctionnement isolé.

**4.** Procédé selon la revendication 1, **caractérisé en ce que**

- le fonctionnement de la turbine (1) est régulé par un régulateur de turbine,
- **en ce que** la tension du générateur ($U_{gen}$) est régulée avec un régulateur de tension, et
- **en ce que** pendant le fonctionnement isolé, par régulation adaptée du régulateur de turbine, du régulateur de tension et de la résistance ajustable (42) et donc par adaptation résultante de la différence de phase ($\Delta\varphi$) de la tension du générateur ($U_{gen}$) par rapport à la tension (Ures) du réseau (17), pour une vitesse de rotation constante du générateur (13), la puissance et/ou la tension du générateur ($U_{gen}$) sont modifiées.

**5.** Procédé selon l'une quelconque des revendications 1 à 4,
**caractérisé en ce que**
l'on utilise comme résistance pouvant être mise en circuit (42) une pluralité de résistances partielles (R1,..., R3) pouvant être mises en circuit indépendamment.

**6.** Procédé selon la revendication 5,
**caractérisé en ce que**
l'on utilise comme résistance pouvant être mise en circuit (42) une pluralité de résistances partielles (R1,..., R3) pouvant être mises en circuit indépendamment, qui sont montées en parallèle et qui présentent des coefficients de résistance échelonnés.

**7.** Procédé selon l'une quelconque des revendications 1 à 6,
**caractérisé en ce que**
la résistance (42) à ajuster est mise en circuit par le biais de semiconducteurs de puissance, de préférence par le biais de paires de thyristors (T11, T12) montées de manière antiparallèle.

**8.** Procédé selon l'une quelconque des revendications 1 à 7,
**caractérisé en ce que**
le générateur (13) est séparé du réseau par un limiteur, notamment un limiteur SL (41) ou un limiteur PTC.

EP 0 984 552 B1

*Fig. 2*

*Fig. 1*

10

*Fig.3*

*Fig.4*

Fig. 5

Fig. 6

Fig. 7

_18_   F i g . 8